# EUROPÄISCHE PATENTSCHRIFT

(11) **EP 3 309 507 B1**
(45) Veröffentlichungstag und Bekanntmachung des Hinweises auf die Patenterteilung: **03.07.2019**
(21) Anmeldenummer: 17196231.9
(22) Anmeldetag: 12.10.2017
(51) Int. Cl.: G01B 11/24, G06T 7/593

(54) **VERFAHREN ZUM ERFASSEN UND OPTIMIEREN VON DREIDIMENSIONALEN OBERFLÄCHENGEOMETRIEN**
METHOD FOR DETECTING AND OPTIMIZATION OF THREE-DIMENSIONAL SURFACE GEOMETRIES
PROCÉDÉ DE DÉTECTION ET D'OPTIMISATION DE GÉOMÉTRIES DES SURFACES TRIDIMENSIONNELLES

(30) Priorität: 13.10.2016 AT 5021016 U
(43) Veröffentlichungstag der Anmeldung: 18.04.2018
(73) Patentinhaber: a.tron3d GmbH, 9020 Klagenfurt am Wörthersee (AT)
(72) Erfinder: JESENKO, Juergen, 9587 Riegersdorf (AT); REICHMANN, Andrej, 9073 Klagenfurt-Viktring (AT)
(74) Vertreter: Beer & Partner Patentanwälte KG

(56) Entgegenhaltungen:
- EP-A1- 2 886 043
- US-A1- 2014 146 057
- US-A1- 2015 145 957

## Beschreibung

Die Erfindung betrifft ein Verfahren zum Erfassen und Optimieren von dreidimensionalen Oberflächengeometrien, welche in einer Voxelgrid basierten Notation hinterlegt sind.

In vielen technischen Gebieten wird heutzutage die Oberflächengeometrie von Objekten erfasst. Von der Qualitätssicherung, über archivarische Aufgaben bis hin zu bildgebenden Verfahren in der Medizin, finden verschiedene dreidimensionale Methoden der Oberflächenerfassung Anwendung. Dabei wird die Qualität und Anwendbarkeit der erfassten Geometrie im Wesentlichen durch zwei grundlegende Elemente bestimmt.

Zuerst werden Tiefeninformationen erhoben. Dies beinhaltet üblicherweise, dass eine Form von Welle auf das zu erfassende Objekt geschickt, von diesem reflektiert und dann durch einen Sensor erfasst wird. Bei optischen Verfahren handelt es sich dabei üblicherweise um Licht und als Sensoren können beispielsweise CCD-Chips eingesetzt werden. Mit den Sensordaten werden dann Reliefstrukturen, insbesondere in Form von Tiefenbildern, aus der jeweiligen Perspektive des Sensors errechnet. Dieser Teil des Erfassens der Oberflächengeometrie hängt vor allem von den physischen Komponenten, mit denen die Oberfläche erfasst wird, wie beispielsweise die Genauigkeit bzw. Auflösung von Sensoren, Präzision von Linsen und dergleichen, ab.

Die rechnerischen Schritte beim Zusammenfügen der einzelnen Reliefs zu einem gemeinsamen dreidimensionalen Modell sind die zweite wesentliche Komponente beim Erfassen von dreidimensionalen Oberflächengeometrien. Wesentlicher Teil dieser zweiten entscheidenden Komponente ist die Notation, welche für den gemeinsamen 3D-Kontext gewählt wird.

Für verschiedene Aufgaben können dabei verschiedene Notationen sinnvoll sein. Soll die Aufnahme beispielsweise möglichst einfach darstellbar sein und nach dem Erfassen nicht mehr verändert werden, eignet sich eine polygonale Notation wie die STL. Dabei wird die Oberfläche als Netz von Dreiecken notiert, wobei jedes Dreieck über die Koordinaten seiner drei Eckpunkte sowie seine Oberflächennormale definiert wird. Solche nicht oder nur sehr schwer veränderbaren Notationen sind beispielsweise für das konservatorische Scannen von Kunstwerken, wie beispielsweise antike Statuen, besonders geeignet.

Den herkömmlichen Notationen als Polygonnetz stehen Voxelgrid basierte Notationen, wie beispielsweise die SDF (Signed Distance Function) und TSDF (Truncated Signed Distance Function), gegenüber. Der Einfachheit halber wird im Folgenden nur die TSDF erläutert; die für diese genannten Eigenschaften lassen sich aber vom Fachmann problemlos auf andere Voxelgrid basierte Notationen, wie beispielsweise die SDF, übertragen.

Die Truncated Signed Distance Function (TSDF) gibt an einer Position innerhalb eines definierten dreidimensionalen Rasters (dem Voxelgrid) die Distanz zur nächstliegenden Oberfläche an. Das Voxelgrid ist dabei üblicherweise orthogonal und äquidistant in Rasterpunkte (Voxel) unterteilt. Das Vorzeichen des Funktions- bzw. Distanzwertes gibt Aufschluss darüber, ob sich dieser Punkt außerhalb oder innerhalb der Oberfläche befindet. Die tatsächliche Oberfläche ist implizit gegeben und befindet sich an den Stellen, an denen die Funktion den Wert Null annimmt. Zur exakten Bestimmung der Oberfläche genügt es, wenn lediglich die Abstandswerte nahe der Oberfläche genau bekannt sind. Überschreitet die Funktion eine gewisse Maximaldistanz, so wird der Wert abgeschnitten (truncated) und als "weit weg" interpretiert. Es ist üblich, für den Maximalwert den Abstand zweier Rasterpunkte zueinander zu wählen. Weitere Erläuterungen zur TSDF sind beispielsweise in der US 2015/0145957 A1 beschrieben.

Notationen, bei denen das Voxelgrid nicht äquidistant und/oder orthogonal ist, sind ebenfalls denkbar. So kann beispielsweise je nach Messmethode auch ein kugelförmiges Raster, bei dem die Koordinaten in Längen- und Breitengraden zusammen mit einem Abstand zur Mitte der Kugel notiert werden, von Vorteil sein.

Die TSDF hat zwei entscheidende Vorteile. So können bei einer TSDF für jeden Bereich der Oberfläche bzw. des dreidimensionalen Objektes (im Rahmen ihrer Auflösung) neben der Geometrie des Objektes auch weitere Informationen innerhalb der TSDF gespeichert werden. Diese Informationen können beispielsweise Informationen zum Material des Objektes sein. Diese Notation wird häufig bei Computerspielen verwendet. So kann beispielsweise bei einer Umgebung einer Oberfläche die Information "aus Wasser" oder "aus Erde" angegeben werden, um so die Interaktion mit der Umgebung realistischer zu gestalten. In der medizinischen/diagnostischen Bildgebung können dementsprechend Informationen, wie beispielsweise "Fett", "Nervengewebe" und dergleichen, hinterlegt werden. Eine weitere mögliche Anwendung dieser Zusatzinformationen ist beispielsweise bei erfassten Oberflächen möglich, bei denen besonderer Wert auf möglichst hohe Präzision gelegt wird. So kann Voxeln aufgrund der Bedingungen beim Erfassen der Oberflächengeometrie der Oberfläche ein Wert zugeordnet werden, wie wahrscheinlich die erfasste Oberflächengeometrie der realen Oberflächengeometrie des Objektes entspricht.

Der zweite große Vorteil einer Voxelgrid basierten Notation gegenüber einer polygonalen Notation besteht darin, dass eine Voxelgrid basierte Notation wesentlich leichter zu verändern und zu ergänzen ist. Dies liegt am grundlegenden Unterschied zwischen expliziten und impliziten Notationen. Ist eine 3D-Oberfläche in einer expliziten Notation, wie einem Polygonnetz, beispielsweise einer STL, angegeben, führt die Veränderung auch nur eines Punktes zur Veränderung aller über diesen Punkt definierten Polygone mit ihren Oberflächennormalen. Die dafür erforderlichen Berechnungen sind langwierig, ressourcenintensiv und können zu einem Verfälschen der gesamten Oberflächengeometrie führen. Ein Zusammenführen von zwei - selbst geringfügig - unterschiedlichen Polygonnetzen ist zwar theoretisch möglich, erfordert aber, dass alle Punkte in beiden Polygonnetzen einem jeweils korrespondierenden Punkt im anderen Polygonnetz zugeordnet sind, so dass eine Mittelung ihrer Position vorgenommen werden kann. Da dies bei Anwendungen mit realen, erfassten Oberflächen nicht möglich ist, werden bei Änderungen von Polygonnetzen in der Regel einfach die Bereiche, welche sich geändert haben, ausgeschnitten und durch neue Oberflächenbereiche ersetzt.

Dem gegenüber sind implizite Oberflächennotationen wesentlich einfacher zu ergänzen, da hier jede Oberflächeninformation, die erfasst und/oder notiert wird, zunächst für sich steht.

Zusätzlich ist beispielsweise für eine TSDF nachweisbar, dass, allein aufgrund der Notation, die Qualität der notierten bzw. erfassten Oberfläche bei einer TSDF ansteigt, wenn mehr Aufnahmen der Oberfläche gemacht werden, die innerhalb derselben TSDF notiert werden. Eine Möglichkeit, die in dieser Form bei polygonbasierten Notationen nicht gegeben ist.

Der Erfindung liegt die Aufgabe zu Grunde, weitere verbesserte Anwendungen für Voxelgrid basierten Notationen zur Verfügung zu stellen.

Gelöst wird diese Aufgabe erfindungsgemäß durch ein Verfahren mit den Merkmalen des Anspruchs 1.

Beim erfindungsgemäßen Verfahren wird während eines ersten im Wesentlichen beliebigen Zeitpunkts des Erfassens ein Klon von wenigstens einem Teil der Oberflächengeometrie erzeugt wird, wobei der Klon von der Oberflächengeometrie unabhängig bearbeitet wird bzw. bearbeitet werden kann. Der Klon und die Oberflächengeometrie werden dann zu einem zweiten im Wesentlichen beliebigen Zeitpunkt während des Erfassens wieder zusammengeführt.

Unter einem Teil der Oberflächengeometrie kann dabei sowohl ein bestimmter Bereich, beispielsweise ein Quadrant des Voxelgrids, als auch eine Menge an Informationen, beispielsweise alle Informationen mit einer bestimmten Eigenschaft, verstanden werden.

Es wird also eine Momentaufnahme der Oberflächengeometrie erzeugt, die ab dem Zeitpunkt des Erzeugens unabhängig von der "eigentlichen" (live-) Oberflächengeometrie, welche nach dem Klonen weiter um Daten ergänzt wird, existiert und bearbeitet werden kann. Dies hat zwei vorteilhafte Wirkungen. Zum einen ist der so erzeugte Klon statisch, er verändert sich also nicht mehr durch extern zugeführte Daten, was viele Berechnungen ermöglicht, die während eines laufenden Scanvorgangs nicht möglich wären. Zum anderen ist für das Bearbeiten des Klons im Wesentlichen kein Zeitlimit mehr gegeben. Insbesondere bei medizinischen Anwendungen, wie beispielweise der Bildgebung im Dentalbereich, ist eine Darstellung der erfassten Oberfläche in Echtzeit für die Nutzerfreundlichkeit von höchster Priorität, weswegen üblicherweise jeder Berechnungsschritt innerhalb eines sehr engen Zeitlimits ausgeführt werden muss, um dem Nutzer die Wahrnehmung einer Echtzeit-Darstellung zu geben. Daher werden während des laufenden Erfassens einer Oberflächengeometrie viele mögliche und insbesondere verbessernde Berechnungen an dieser nicht durchgeführt.

Das Voxelgrid, in welchem der Klon notiert ist, muss dabei nicht zwingend dieselbe Größe haben wie das Voxelgrid, in dem die Oberflächengeometrie selbst notiert ist. Die Größe des Voxelgrids hat dabei keinen Einfluss auf die im Voxelgrid eingetragene Oberfläche; ähnlich wie die Größe eines zweidimensionalen Koordinatensystems keinen Einfluss auf die in dem Koordinatensystem eingetragenen Werte hat.

Es hat sich allerdings als vorteilhaft erwiesen, den Klon in einem größeren Voxelgrid als die (originale) Oberflächengeometrie zu notieren, da beim Bearbeiten des Klons zusätzliche Daten entstehen können, die unter Umständen an neuen Voxelkoordinaten notiert werden müssen, die vom bestehenden Voxelgrid nicht abgedeckt sind.

Unabhängig von einer Änderung der Größe des Voxelgrids kann auch die Position der Oberflächengeometrie oder des Klons der Oberflächengeometrie innerhalb des Voxelgrids verändert werden. Dies schließt sowohl translatorische als auch rotatorische Bewegungen ein. Dadurch kann die Verwendung des Voxelgrids optimiert werden. Selbstverständlich kann dabei eine entsprechende Transformationsmatrix (je nach Bedarf bestehend aus einem Translationsvektor und/oder einer Rotationsmatrix) hinterlegt werden, um das spätere Zusammenführen von Oberflächengeometrie und Klon zu vereinfachen.

Eine bevorzugte Methode des Erfassens ist dabei das optische, insbesondere das stereometrische, Erfassen der Oberflächengeometrie. Stereometrisch erfasste Oberflächengeometrien sind dabei besonders vorteilhaft, da bei den üblichen stereometrischen Methoden der Abstand der Oberfläche zur Stereobasis der aufnehmenden Sensoren bzw. Kameras ermittelt wird. Diese Abstände lassen sich nach Ermitteln einer Rotationsmatrix und eines Translationsvektors (zusammen Translationsmatrix) besonders komfortabel in einem Voxelgrid, beispielsweise in einer TSDF notieren, da diese Notation auch auf Abständen in einer bestimmten Blickrichtung basiert.

Gemäß einer weiteren bevorzugten Durchführungsform des Verfahrens sind die Werte in der Oberflächengeometrie und im Klon gewichtet. Dies bedeutet, dass jedem Abstandswert ein Gewicht zugeordnet ist, das die Wahrscheinlichkeit widerspiegelt, mit welcher der Wert korrekt ist. Stark vereinfacht lässt sich sagen: Wird an einem Punkt häufiger eine Oberfläche "gesehen", steigt das Gewicht; wird ein Raumpunkt als leer erkannt, sinkt das Gewicht.

Bevorzugt werden Zusatzinformationen zu den Oberflächeninformationen innerhalb der Oberflächengeometrie beim Klonen übernommen. Zum Zeitpunkt des Erzeugens des Klons haben der Klon und die Oberflächengeometrie daher die gleichen Gewichte pro Voxel notiert.

Erfindungsgemäß wird der Klon nach dem Erzeugen bearbeitet. Dieses Bearbeiten kann beispielsweise das Entfernen von Artefakten beinhalten, die durch rechnerische Fehler oder durch falsche Aufnahmen entstanden sind. Falsche Aufnahmen können im Dentalbereich beispielweise entstehen, wenn die Zunge oder Wangeninnenseite des Patienten oder auch ein Instrument, wie beispielsweise ein Sauger, in das Sichtfeld des Instruments zum Erfassen der Oberflächengeometrie geraten und fälschlicherweise aufgenommen werden, obwohl sie nicht zu den intraoralen Strukturen gehören, die aufgenommen werden sollen.

Eine weitere Möglichkeit für das Bearbeiten des Klons ist das Schließen von Lücken. So könnte für einen Bereich, der noch Lücken aufweist, die Krümmung der Oberfläche bestimmt und daraus ein möglicher Verlauf der Oberfläche approximiert werden. Selbstverständlich wären die dabei entstehenden, künstlichen Oberflächen mit einem entsprechend geringen Gewicht innerhalb des Klons zu versehen. Wird das Gewicht beim Zusammenführen der Oberflächengeometrie und des Klons dann übernommen, kann es leicht durch "echte" gesehene* Abstände überschrieben bzw. korrigiert werden (*siehe auch US 9,363,501 B).

Bevorzugt werden die Gewichte in der Oberflächengeometrie und im Klon beim Zusammenführen addiert. Möchte man beim Bearbeiten des Klons dafür sorgen, dass bestimmte Gewichte in der notierten und in der Zwischenzeit um weitere erfasste Daten ergänzten Oberflächengeometrie beim Zusammenführen geschwächt werden, kann man für diese Voxel innerhalb des Klons auch negative Gewichte wählen.

Eine weitere Möglichkeit für das Bearbeiten des Klons ist, den Voxeln Informationen hinzuzufügen, die weder mit dem Gewicht der Voxel noch mit der Geometrie der Oberfläche zu tun haben.

Beispielsweise könnte man Voxel mit Informationen über die Zusammensetzung des Materials der Oberfläche versehen. Im Dentalbereich könnte beispielsweise aufgrund der Krümmung der Oberfläche zwischen den Eigenschaften "Zahn" und "Zahnfleisch" unterschieden werden. Oder es könnten mögliche Präparationsvorschläge ausgearbeitet werden, deren Grenzen dann auf der visualisierten Oberfläche dargestellt werden können.

Weitere bevorzugte Ausführungsformen der Erfindung sind Gegenstand der Unteransprüche.

Nachstehend ist ein bevorzugtes Ausführungsbeispiel der Erfindung anhand der Zeichnung näher beschrieben. Es zeigt:

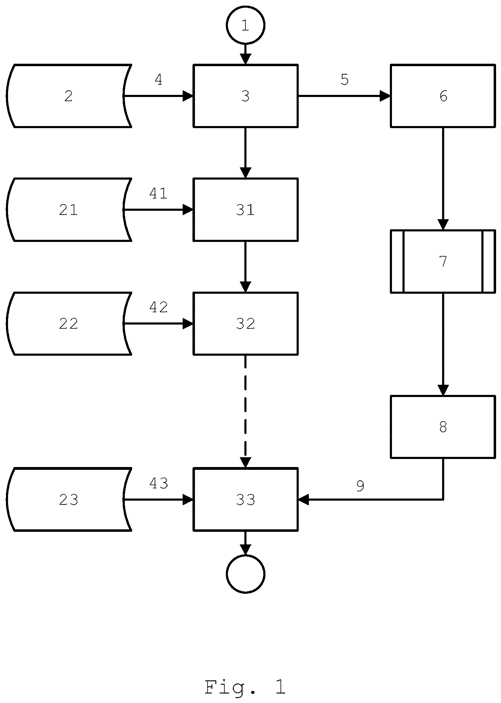

- Fig. 1: eine stark schematisierte Skizze eines beispielhaften, erfindungsgemäßen Verfahrens.

Im nachstehend beschriebenen Durchführungsbeispiel eines Verfahrens zum Erfassen und Optimieren einer dreidimensionalen Oberflächengeometrie wird für die Notation der Oberflächengeometrie beispielhaft eine TSDF verwendet. Ein Klon der Oberflächengeometrie ist im beschriebenen und dargestellten Beispiel dementsprechend eine CTSDF (s.u.).

Das erfindungsgemäße Verfahren beginnt zu einem ersten Zeitpunkt 1 des Erfassens. Externe Daten 2 aus einem Erfassungsprozess werden einer TSDF 3 hinzugefügt (Schritt 4). Dann wird von der TSDF 3 ein Klon erstellt (Schritte 5) und so eine CTSDF 6 (Cloned Truncated Signed Distance Function) erzeugt. Die CTSDF 6 wird dann bearbeitet (Schritt 7). Währenddessen werden weitere externe Daten 21, 22 erzeugt und der TSDF 31, 32 in den Schritten 41, 42 hinzugefügt. Durch das Bearbeiten 7 der CTSDF 6 entsteht eine bearbeitete CTSDF 8.

Nachdem zum n-ten Mal Daten 23 der TSDF hinzugefügt wurden (Schritt 43) und so eine n-te TSDF 33 entstanden ist, werden die n-te TSDF 33 und die bearbeitete CTSDF 8 zusammengeführt (Schritt 9). Beim Zusammenführen 9 werden die vorteilhaften Verbesserungen an der bearbeiteten CTSDF 8 in die n-te TSDF 33 übernommen und die n-te TSDF 33 selbst wird verbessert, obwohl der Scanvorgang in dieser Zeit nicht unterbrochen wurde.

### Bezugszeichenliste:

- 1: erster Zeitpunkt des Erfassens
- 2: externe Daten (aus Erfassen)
- 21: weitere externe Daten
- 22: weitere externe Daten
- 23: n-te externe Daten
- 3: TSDF (Original)
- 31: weitere TSDF
- 32: weitere TSDF
- 33: n-te TSDF
- 4: Hinzufügen von Daten aus dem Erfassen
- 41: weiteres Hinzufügen
- 42: weiteres Hinzufügen
- 43: n-tes Hinzufügen
- 5: Klonen
- 6: CTSDF
- 7: Bearbeiten der CTSDF
- 8: bearbeitete CTSDF
- 9: Zusammenführen von n-ter TSDF und bearbeiteter CTSDF

## Patentansprüche

1. Verfahren zum Erfassen und Optimieren einer dreidimensionalen Oberflächengeometrie, welche in einer Voxelgrid basierten Notation hinterlegt sind, **dadurch gekennzeichnet, dass** während eines ersten Zeitpunkts des Erfassens ein Klon von wenigstens einem Teil der Oberflächengeometrie erzeugt wird, dass der Klon der Oberflächengeometrie von der Oberflächengeometrie unabhängig bearbeitet wird und dass der bearbeitete Klon der Oberflächengeometrie und die Oberflächengeometrie zu einem zweiten Zeitpunkt während des Erfassens wieder zusammengeführt (9) werden.

2. Verfahren nach Anspruch 1, **dadurch gekennzeichnet, dass** das Voxelgrid, in welchem die Oberflächengeometrie notiert ist, und das Voxelgrid, in welchem der Klon der Oberflächengeometrie notiert ist, gleich groß sind.

3. Verfahren nach Anspruch 1, **dadurch gekennzeichnet, dass** das Voxelgrid, in welchem die Oberflächengeometrie notiert ist, und das Voxelgrid, in welchem der Klon der Oberflächengeometrie notiert ist, unterschiedlich groß sind.

4. Verfahren nach Anspruch 3, **dadurch gekennzeichnete, dass** das Voxelgrid, in welchem der Klon notiert ist, größer ist als das Voxelgrid, in welchem die Oberflächengeometrie notiert ist.

5. Verfahren nach einem der Ansprüche 1 bis 3, **dadurch gekennzeichnet, dass** das Erfassen optisch, insbesondere stereometrisch, erfolgt.

6. Verfahren nach einem der Ansprüche 1 bis 4, **dadurch gekennzeichnet, dass** die Oberflächengeometrie in einer TSDF (3) notiert ist.

7. Verfahren nach einem der Ansprüche 1 bis 5, **dadurch gekennzeichnet, dass** die Werte der Oberflächengeometrie und des Klons (6) der Oberflächengeometrie gewichtet sind.

8. Verfahren nach Anspruch 6, **dadurch gekennzeichnet, dass** die Gewichtungen der Oberflächengeometrie und des Klons der Oberflächengeometrie beim Zusammenführen (9) ebenfalls zusammengeführt werden.

9. Verfahren nach einem der Ansprüche 1 bis 7, **dadurch gekennzeichnet, dass** während des unabhängigen Bearbeitens Attribute des Klons erzeugt werden und dass die Attribute des Klons beim Zusammenführen (9) in die Oberflächengeometrie übernommen werden.

10. Verfahren nach einem der Ansprüche 1 bis 8, **dadurch gekennzeichnet, dass** während des unabhängigen Bearbeitens Attribute der Oberflächengeometrie bearbeitet werden und dass die bearbeiteten Attribute beim Zusammenführen (9) in die Oberflächengeometrie übernommen werden.

## Claims

1. Method for detecting and optimizing a three-dimensional surface geometry, which is stored in a voxel-grid-based notation, **characterized in that** during a first instant of detection, a clone of at least one part of the surface geometry is generated, **in that** the clone of the surface geometry is processed independently of the surface geometry, and **in that** the processed clone of the surface geometry and the surface geometry are brought together (9) again at a second instant during the detection.

2. Method according to claim 1, **characterized in that** the voxel grid in which the surface geometry is notated and the voxel grid in which the clone of the surface geometry is notated are of the same size.

3. Method according to claim 1, **characterized in that** the voxel grid in which the surface geometry is notated and the voxel grid in which the clone of the surface geometry is notated are of different size.

4. Method according to claim 3, **characterized in that** the voxel grid in which the clone is notated is larger than the voxel grid in which the surface geometry is notated.

5. Method according to one of claims 1 to 3, **characterized in that** detecting takes place optically, in particular stereometrically.

6. Method according to one of claims 1 to 4, **characterized in that** the surface geometry is notated in a TSDF (3).

7. Method according to one of claims 1 to 5, **characterized in that** the values of the surface geometry and of the clone (6) of the surface geometry are weighted.

8. Method according to claim 6, **characterized in that** in being brought together (9), the weightings of the surface geometry and of the clone of the surface geometry are likewise brought together.

9. Method according to one of claims 1 to 7, **characterized in that** during the independent processing, attributes of the clone are generated and **in that** the attributes of the clone are taken over into the surface geometry in being brought together (9).

10. Method according to one of claims 1 to 8, **characterized in that** during the independent processing, attributes of the surface geometry are processed and **in that** the processed attributes are taken over into the surface geometry in being brought together (9).

## Revendications

1. Procédé, destiné à détecter et à optimiser une géométrie de surface tridimensionnelle, laquelle est enregistrée dans une notation basée dans une grille de voxels, **caractérisé en ce qu'**à un premier moment de la détection, on créé un clone d'au moins une partie de la géométrie de surface, **en ce qu'**on traite le clone de la géométrie de surface indépendamment de la géométrie de surface et **en ce qu'**à un deuxième moment, pendant la détection, on réunit (9) le clone de la géométrie de surface traité et la géométrie de surface.

2. Procédé selon la revendication 1, **caractérisé en ce que** la grille de voxels, dans laquelle est notée la géométrie de surface et la grille de voxels, dans laquelle est noté le clone de la géométrie de surface sont de même taille.

3. Procédé selon la revendication 1, **caractérisé en ce que** la grille de voxels, dans laquelle est notée la géométrie de surface et la grille de voxels, dans laquelle est noté le clone de la géométrie de surface sont de taille différente.

4. Procédé selon la revendication 3, **caractérisé en ce que** la grille de voxels, dans laquelle est noté le clone est plus grande que la grille de voxels, dans laquelle est notée la géométrie de surface.

5. Procédé selon l'une quelconque des revendications 1 à 3, **caractérisé en ce que** la détection s'effectue optiquement, notamment stéréométriquement.

6. Procédé selon l'une quelconque des revendications 1 à 4, **caractérisé en ce que** la géométrie de surface est notée dans une TSDF (3).

7. Procédé selon l'une quelconque des revendications 1 à 5, **caractérisé en ce que** les valeurs de la géométrie de surface et du clone (6) de la géométrie de surface sont pondérées.

8. Procédé selon la revendication 6, **caractérisé en ce que** lors de la réunion (9), on réunit aussie les pondérations de la géométrie de surface et du clone de la géométrie de surface.

9. Procédé selon l'une quelconque des revendications 1 à 7, **caractérisé en ce que** pendant le traitement indépendant, on créé des attributs du clone et **en ce que** lors de la réunion (9), on transfère les attributs du clone dans la géométrie de surface.

10. Procédé selon l'une quelconque des revendications 1 à 8, **caractérisé en ce que** pendant le traitement indépendant, on traite des attributs de la géométrie de surface et **en ce que** lors de la réunion (9), on transfère les attributs traités dans la géométrie de surface.
